# EUROPEAN PATENT SPECIFICATION

(11) **EP 3 286 146 B1**
(45) Date of publication and mention of the grant of the patent: **07.10.2026**
(21) Application number: 16783954.7
(22) Date of filing: 22.04.2016
(51) Int. Cl.: C02F 1/56, C09D 7/00, B01D 21/01, C02F 1/26, C08L 33/26, C02F 101/30, C02F 103/14

(54) **PAINT DETACKIFIER COMPOSITION AND USES THEREOF**
LACKABLÖSUNGSZUSAMMENSETZUNG UND VERWENDUNGEN DAVON
COMPOSITION ANTIADHÉSIVE POUR PEINTURE ET SES UTILISATIONS

(30) Priority: 23.04.2015 CN 201510195468; 01.06.2015 US 201562169380 P
(43) Date of publication of application: 28.02.2018
(73) Proprietor: Ecolab USA Inc., St. Paul, MN 55102 (US)
(72) Inventor: CHEN, Zhe, Pudong Shanghai 201206 (CN); SHEN, Jian Kun, Saint Paul , MN 55102 (US); MIKNEVICH, Joseph, Saint Paul , MN 55102 (US); YUAN, Qing Qing, Pudong Shanghai 201206 (CN); ZHANG, Meng, Pudong Shanghai 201206 (CN); CHEN, Guo, Pudong Shanghai 201206 (CN); ZHOU, Yueming, Pudong Shanghai 201206 (CN)
(74) Representative: Godemeyer Blum Lenze Patentanwälte Partnerschaft mbB - werkpatent
(86) International application number: PCT/US2016/028889
(87) International publication number: WO 2016/172510

(56) References cited:
- EP-A2- 0 503 933
- WO-A1-03/010233
- WO-A1-2011/002677
- WO-A1-2015/038901
- WO-A2-2011/075650
- US-A- 5 294 352
- US-A- 6 136 200

## Description

### Technical field

The present application relates to a paint detackifier composition and, more particularly, to a paint detackifier composition for treatment of recirculating water in a paint spray booth.

### Background

The spray painting of automobile bodies, automobile parts and a variety of products for industrial use and consumer products is generally conducted in completely or partially enclosed working areas with good mechanical ventilation, i.e. paint spray booths. In spray painting, the paints are atomized to form particles via tools such as air spray gun and electrostatic rotary-bell spray gun. Due to low transfer efficiency (transfer efficiency means the ratio of paints adhered to the sprayed objects to overall paints sprayed) of spraying paint, there is a very serious overspray problem. About only 50% to 80% of paint mists adhere to the surface of the sprayed workpiece to form a paint film, and the remaining 20% to 50% paint particles become oversprayed paint mists escaping into the surrounding environment.

Oversprayed paint mists contain highly-pelletized solvents and solid particles, such as aromatic hydrocarbon, alcohol, ketone and resin. These pollutants may diffuse into the air to pollute the equipment or the surrounding environment, or adhere to a paint film to form particles to influence spraying quality, and meanwhile do harm to health of the workers. In terms of safety and cost, most commonly, water is recirculated in paint spray booths to absorb and capture oversprayed paint mists. However, water containing oversprayed paints may have negative influence on the equipment and working environment and result in poor spraying qualities (such as orange peel and paint drops phenomena), and thus needs to be treated. Currently, it is common practice to add paint detackifiers into recirculating water in paint spray booths to capture and reduce the stickiness of oversprayed paint mists.

The existing paint detackifiers have many defects, such as high cost, poor detackification effect for water-based or solvent-based paints and overgrown microorganism in paint spray booth recirculating water.

US 529 43 52 A is directed to a composition for the detackification and clarification of acid and alkaline paint and lacquer waste waters and paint spray booth wastes, comprising: an inorganic-organic and/or organic adduct alloy polymer composition having the formula: A*B+*D+ wherein: A=((SiO2/MeI2O)uMeIImMemIII(OH)p(SO4)y(Aci)(2m+3n)-p-2y)4 where r=1 to 98% bw; u=0 to 10% bw; (* CHEMICAL STRUCTURE *) where: x=0 to 98% bw; Z is a divalent substituted or unsubstituted aliphatic, cycloaliphatic, heterocyclic or aromatic radical D+(PQAM)w where w=2 to 98% b.w. of polyquaternized polymer (PQAM) MemII is selected from the divalent cationic group comprising: Mg, Zn, Ca, and Fe2+ m=0 to 5 MenIII is a tri-or more valent metal selected from the group comprising: Fe, Al, and Al-Zn complexes; n=1 to 20 Aci is selected from the monovalent anionic group comprising Cl-, Br-, I-, NO3-, H2PO4-, CH3COO-, OH- or a mixture of two or more of the foregoing, but preferably Aci is Cl-, NO3-, CH3COO-, or H2PO4-; MeI=Na, K, Li, Cs p=0 to 75 y=0 to 15 The method of manufacturing such compositions is also disclosed.

Accordingly, there is a need for a low cost, high performance and environment-friendly paint detackifier with excellent detackification effect for both water-based and solvent-based paints.

### Brief Summary

The present disclosure relates to compositions and methods of using the compositions. In one embodiment, a composition is disclosed comprising an organic component and a metal salt, the organic component being an aldehyde-functionalized polyacrylamide. The aldehyde-functionalized polyacrylamide is 0.01 to 70 % by weight of the composition and the metal salt is 0.05 to 90 % by weight of the composition; wherein the metal salt is selected from the group consisting of aluminum salt, 10 iron salt, zirconium salt, aluminum sulfate, aluminum chloride, polyaluminum chloride, polyaluminum nitrate, polyaluminum sulfate, aluminum chlorohydrate, polyaluminum silicate sulfate, polyaluminum nitrate sulfate, polyaluminum sulfate chloride, zirconium, iron sulfate, iron chloride, polyiron chloride, polyiron sulfate, polyiron silicate sulfate, polyiron sulfate chloride, and any combination thereof.

In another embodiment, the use of a composition is disclosed in connection with a liquid medium of an aqueous liquid system.

### Detailed Description

Below is a summarization of the subject matter disclosed in the present application. This summarization is not intended to limit the scope of claims.

An object of the present disclosure is to provide a composition according to the subject-matter of claim 1.

In an embodiment, an object of the present disclosure is to provide a paint detackifier composition.

Another object of the present disclosure is to provide the use of the composition in a liquid medium of an aqueous liquid system.

In an embodiment, another object of the present disclosure is to provide the use of the paint detackifier composition for detackifying paint in aqueous liquid.

Still another object of the present disclosure is to provide the use of the paint detackifier composition for detackifying paint in paint spray booth recirculating water.

Still another object of the present disclosure is to provide a method for treating paint spray booth recirculating water.

In an embodiment, the composition of the present disclosure may comprise: 1) an organic component; and 2) a metal salt; the organic component being an aldehyde-functionalized polyacrylamide wherein the aldehyde-functionalized polyacrylamide is 0.01 to 70 % by weight of the composition and the metal salt is 0.05 to 90 % by weight of the composition; wherein the metal salt is selected from the group consisting of aluminum salt, 10 iron salt, zirconium salt, aluminum sulfate, aluminum chloride, polyaluminum chloride, polyaluminum nitrate, polyaluminum sulfate, aluminum chlorohydrate, polyaluminum silicate sulfate, polyaluminum nitrate sulfate, polyaluminum sulfate chloride, zirconium, iron sulfate, iron chloride, polyiron chloride, polyiron sulfate, polyiron silicate sulfate, polyiron sulfate chloride
and any combination thereof.

In a specific embodiment, the organic component is an aldehyde-functionalized polyacrylamide obtained by the reaction of a dialdehyde with a polyacrylamide.

In a specific embodiment, the organic component comprises an aldehyde-functionalized polyacrylamide obtained by the reaction of a dialdehyde with a polyacrylamide.

In a specific embodiment, the composition may be the paint detackifier composition. The paint detackifier composition of the present disclosure may comprise 1) a dialdehyde-functionalized polyacrylamides, and 2) aluminum salt and/or iron salt.

In the present application, the terms "paint detackifier composition", "paint detackifying composition" and "paint killer composition" are interchangeably used.

The term "dialdehyde-functionalized polyacrylamides" and "aldehyde-functionalized polyacrylamide" are used interchangeably and as used herein means the polyacrylamides prepared by the reaction of multifunctional (such as dibasic or di-functional) aldehyde and polyacrylamides. A person skilled in the art may prepare the dialdehyde-functionalized polyacrylamides according to the known technique, such as preparation process as shown in U.S. Published Patent Application No. U.S. 2009/0165978, U.S. Patent No. 8,709,207, U.S. Patent No. 7,641,766, and U.S. Patent No. 7,901,543, which are owned by Nalco Company. For example, see Example 2 of U.S. Patent No. 7,901,543. A person skilled in the art may adjust suitable reaction conditions such as pH value, temperature, reaction medium and selection of other suitable additives such as catalyst, depending on raw material used. The dialdehyde-functionalized polyacrylamides also may be commercially available as products such as Nalco64280, Nalco64170, Nalco64180, and Nalco64110.

In the present disclosure, the organic component is a dialdehyde-functionalized polyacrylamide. The weight average molecular weight of the dialdehyde-functionalized polyacrylamides may range between 5,000 and 10,000,000 g/mole, such as between 6,000 and 2,000,000 g/mole. The determination method of the weight average molecular weight is well-known in the art.

The mole ratio of dialdehyde groups to acrylamides monomers (G/A ratio) in the dialdehyde-functionalized polyacrylamides and the mixture of the dialdehyde and the polyacrylamides is in a range of 0.001 to 100:1, such as 0.01 to 10:1 or 0.01 to 5:1.

The term "mixture of dialdehyde and polyacrylamides" as used herein means the physical mixture of dibasic aldehyde and polyacrylamides.

The dibasic aldehyde applicable for the present disclosure may include, without limitation, glyoxal, Malondialdehyde, succindialdehyde, and glutaric dialdehyde. Typically, glyoxal is used as the dibasic aldehyde.

The term "polyacrylamides" as used herein may be formed by copolymerization of acrylamide monomers, cationic monomers and/or anionic monomers. Copolymerization method may be conducted according to the known copolymerization methods of polyacrylamides, for example, the methods disclosed in U.S. Patent No. 7,901,543, such as the methods shown in example 1. Such copolymerization methods are generally as follows: to aqueous phase containing monomers is added dropwise initiator at suitable temperature condition, which gradually leads to polymerization of the monomers. A person skilled in the art can select suitable reaction temperature, reaction medium and other useful additives such as catalyst depending on monomers involved.

In the present disclosure, the weight average molecular weight of the polyacrylamides may range between 4,000 and 200,000 g/mole.

In the present disclosure, the polyacrylamides may be cationic or anionic or zwitterionic. Accordingly, the dialdehyde-functionalized polyacrylamides may also be cationic or anionic or zwitterionic.

Cationic polyacrylamides may be copolymers of one or more acrylamide monomers and one or more cationic monomers (see, for example, U.S. Patent No. 7,641,766 and U.S.

Patent No. 7,901,543); anionic polyacrylamides may be copolymers of one or more acrylamide monomers and one or more anionic monomers (see, for example, WO0011046A1); zwitterionic polyacrylamides may be copolymers of one or more acrylamide monomers, one or more cationic monomers and one or more anionic monomers (see, for example, WO0011046A1).

The term "acrylamide monomer" means a monomer of formula 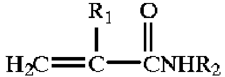 wherein R₁ is H or C₁-C₄ alkyl and R₂ is H, C₁-C₄ alkyl, aryl or arylalkyl. Representative acrylamide monomers are acrylamide and methacrylamide.

The term "alkyl" as used herein means a monovalent group derived from a straight or branched chain saturated hydrocarbon by the removal of a single hydrogen atom. Representative alkyl groups include methyl, ethyl, n- and iso-propyl, cetyl and the like. C₁-C₄ alkyl means alkyls having 1 to 4 carbon atoms, for example methyl, ethyl, n-propyl, isopropyl and the like.

The term "alkylene" as used herein means a divalent group derived from a straight or branched chain saturated hydrocarbon by the removal of two hydrogen atoms. Representative alkylene groups include methylene, ethylene, propylene, and the like.

The term "aryl" as used herein means an aromatic monocyclic or multicyclic ring system having about 6 to about 10 carbon atoms. The aryl is optionally substituted with one or more C₁-C₂₀ alkyl, alkoxy or haloalkyl groups. Representative aryl groups include phenyl or naphthyl, or substituted phenyl or substituted naphthyl. Wherein, the substitution of the substituted phenyl or substituted naphthyl is methyl.

The term "alkyloxy" as used herein means "alkyl-O" groups wherein alkyl is defined hereinabove.

The term "halogen" or "halo-" as used herein may include fluorine, chlorine, bromine and iodine.

The term "arylalkyl" as used herein means an aryl-alkylene-group wherein aryl and alkylene are defined hereinabove. Representative arylalkyl groups include benzyl, phenylethyl, phenylpropyl, 1-naphthylmethyl, and the like, for example benzyl.

In a specific embodiment, the organic component comprises an aldehyde-functionalized polyacrylamide formed by copolymerization of acrylamides monomers, cationic monomers, and/or anionic monomers.

In a specific embodiment, the organic component comprises an aldehyde-functionalized polyacrylamide which is cationic, anionic, or zwitterionic.

In a specific embodiment, the an aldehyde-functionalized polyacrylamide comprises monomers selected from acrylamide or methacrylamide.

The examples of acrylamide monomers useful for the present disclosure may include, but not limited to, acrylamide, methacrylamide, N-substituted acrylamide, N,N-disubstituted acrylamide. Substitution in N-substituted acrylamide and N,N-disubstituted acrylamide may be alkyl wherein alkyl is defined hereinabove. Their examples may include, but not limited to, N-isopropyl acrylamide, N,N-dimethyl acrylamide, N,N-diethyl acrylamide and the like.

There may be more than one (for example two, three or more) kind of acrylamide monomers in polyacrylamides. For example, acrylamide monomers involved in copolymerization may be both acrylamide and methacrylamide.

In some embodiments, acrylamide or methacrylamide is used as acrylamide monomers.

In some specific embodiments, acrylamide is used as acrylamide monomers.

In some embodiments at least one monomer is ethyleneglycol acrylate.

The term "cationic monomer" as used herein includes unsaturated monomers containing amino groups and/or quaternary ammonium groups.

The term "amino group" as used herein means the groups of molecular formula -NHY₂, wherein Y₂ is selected from H, alkyl, aryl and arylalkyl. Alkyl, aryl and arylalkyl are defined hereinabove.

The examples of the cationic monomers suitable for the present disclosure may include, but are not limited to, diallyl-N,N-disubstituted ammonium chloride (where the substitution is methyl, ethyl or propyl), diallydimethylammonium chloride (DADMAC), N-(3-dimethylaminopropyl)methacrylamide, N-(3-dimethylaminopropyl) acrylamide, methacryloyloxyethyltrimethylammonium chloride (DMAEM·MCQ), acryloyloxyethyltrimethylammonium chloride (DMAEA·MCQ), methacryloyloxyethyldimethylbenzylammonium chloride, acryloyloxyethyldimethylbenzylammonium chloride, (3-acrylamidopropyl)trimethylammonium chloride, methacrylamidopropyltrimethylammonium chloride, 3-acrylamido-3-methylbutyltrimethylammonium chloride, 2-vinylpyridine, methacrylic-2-(dimethylamino) ethyl ester, acrylic-2-(dimethylamino) ethyl ester, and any combination thereof. In other words, if there is cationic monomer, there may be more than one (for example two, three or more) kind of cationic monomer or monomers in polyacrylamides as needed.

In some specific embodiments the cationic monomers include one or more of: dialkylaminoalkyl acrylates and methacrylates and their quaternary or acid salts, including, but not limited to, dimethylaminoethyl acrylate methyl chloride quaternary salt, dimethylaminoethyl acrylate methyl sulfate quaternary salt, dimethylaminoethyl acrylate benzyl chloride quaternary salt, dimethylaminoethyl acrylate sulfuric acid salt, dimethylaminoethyl acrylate hydrochloric acid salt, dimethylaminoethyl methacrylate methyl chloride quaternary salt, dimethylaminoethyl methacrylate methyl sulfate quaternary salt, dimethylaminoethyl methacrylate benzyl chloride quaternary salt, dimethylaminoethyl methacrylate sulfuric acid salt, dimethylaminoethyl methacrylate hydrochloric acid salt, dialkylaminoalkylacrylamides or methacrylamides and their quaternary or acid salts such as acrylamidopropyltrimethylammonium chloride, dimethylaminoethyl acrylate methyl chloride quaternary salt, dimethylaminoethyl acrylate benzyl chloride quaternary salt, dimethylaminoethyl methacrylate methyl chloride quaternary salt, dimethylaminoethyl methacrylate benzyl chloride quaternary salt, methacrylamidopropyl trimethylammonium chloride, dimethylaminopropyl acrylamide methyl sulfate quaternary salt, dimethylaminopropyl acrylamide sulfuric acid salt, dimethylaminopropyl acrylamide hydrochloric acid salt, methacrylamidopropyltrimethylammonium chloride, dimethylaminopropyl methacrylamide methyl sulfate quaternary salt, dimethylaminopropyl methacrylamide sulfuric acid salt, dimethylaminopropyl methacrylamide hydrochloric acid salt, diethylaminoethylacrylate, diethylaminoethylmethacrylate, diallyldiethylammonium chloride, diallyldimethylammonium chloride, and the like, and any combinations thereof.

In some specific embodiments the aldehyde-functionalized polyacrylamide are amine-bearing copolymers, such as copolymers of acrylamide and diallylamine or acrylamide and a diallylammonium salt. Representative example of such amine-bearing copolymers are described in U.S. Patent No. 8,852,400, titled "Emulsification of Alkenyl Succinic Anhydride with an Amine-Containing Homopolymer or Copolymer" St. John, M.R., Castro, D. J., Liu, M.

In some specific embodiments, diallydimethylammonium chloride (DADMAC), methacryloyloxyethyltrimethylammonium chloride (DMAEM·MCQ) or acryloyloxyethyltrimethylammonium chloride (DMAEA·MCQ) may be used as cationic monomer.

In a more specific embodiment, diallydimethylammonium chloride (DADMAC) is used as cationic monomer.

In some specific embodiments at least one monomer is Methacrylamidopropyltrimethylammonium Chloride or Methylenebis-Acrylamide-Methacrylamido-Propyl Trimethyl-Ammonium Chloride Co-Polymer (MAPTAC).

Generally, if there is cationic monomer, namely under the circumstance of zwitterionic or cationic polyacrylamides, the amount of the cationic monomer is at least 10 mole percent, for example at least 8 mole percent of the polyacrylamides.

The term "anionic monomer" as used herein includes α,β-unsaturated carboxylic acids having 3 to 7 carbon atoms or their salts.

The examples of the anionic monomers suitable for the present disclosure may include, but are not limited to, acrylic acid, methacrylic acid, itaconic acid, maleic acid, maleic anhydride and salts of these acids and any combination thereof. In other words, if there is anionic monomer, there may be more than one (for example two, three or more) kind of anionic monomer or monomers in polyacrylamides as needed.

Examples of the anionic monomers suitable for the present disclosure may include, but are not limited to, one or more of: acrylic acid, and its salts, including, but not limited to sodium acrylate, and ammonium acrylate, methacrylic acid, and its salts, including, but not limited to sodium methacrylate, and ammonium methacrylate, 2-acrylamido-2-methylpropanesulfonic acid (AMPS), the sodium salt of AMPS, sodium vinyl sulfonate, styrene sulfonate, maleic acid, and its salts, including, but not limited to the sodium salt, and ammonium salt, sulfonate, itaconate, sulfopropyl acrylate or methacrylate or other water-soluble forms of these or other polymerizable carboxylic or sulphonic acids. Sulfomethylated acrylamide, allyl sulfonate, sodium vinyl sulfonate, itaconic acid, acrylamidomethylbutanoic acid, fumaric acid, vinylphosphonic acid, vinylsulfonic acid, allylphosphonic acid, sulfomethylated acrylamide, phosphonomethylated acrylamide, and the like, and any combination thereof.

In some specific embodiments, acrylic acid or methacrylic acid is used as anionic monomer.

Generally, if there is anionic monomer, namely under the circumstance of zwitterionic or anionic polyacrylamides, the amount of the anionic monomer is not more than 30 mole percent, for example 1 to 10 mole percent of the polyacrylamides.

There are both cationic monomers and anionic monomers in the zwitterionic polyacrylamides. In the present disclosure, there is no limitation to the ratio of cationic monomers and anionic monomers as long as a stable polymer can be obtained. Advantageously, mole amounts of anionic monomers are larger than mole amounts of cationic monomers.

Advantageously, total amounts of the anionic monomers and the cationic monomers account for at least 9 mole percent of the zwitterionic polyacrylamides, for example, at least 10 mole percent, but the amount of the cationic monomers is generally not more than 50 mole percent of the zwitterionic polyacrylamides, for example, not more than 25 mole percent.

In an embodiment, in the composition of the present disclosure, the organic component is 0.01 to 70 by weight % of the composition and the metal salt is 0.05 to 90 by weight % of the of the composition, preferably the organic component is 0.35 to 50 by weight % of the composition and the metal salt is 0.5 to 80 by weight % of the of the composition.

In a specific embodiment, the paint detackifier composition of the present disclosure may include 0.01 to 15 by weight % of the dialdehyde-functionalized polyacrylamides, and 0.05 to 40 by weight % of the aluminum salt and/or iron salt, based on total amount of the composition.

In a more specific embodiment, the paint detackifier composition of the present disclosure may include 0.35 to 10 by weight % of the dialdehyde-functionalized polyacrylamides, and 0.5 to 35 by weight % of the aluminum salt and/or iron salt, based on total amount of the composition.

In another more specific embodiment, the paint detackifier composition of the present disclosure may include 1 to 5 by weight % of the dialdehyde-functionalized polyacrylamides, and 15 to 35 by weight % of the aluminum salt and/or iron salt, based on total amount of the composition.

In a more specific embodiment, the metal salt is selected from the group consisting of: aluminum salt, iron salt, zirconium salt, aluminum sulfate, aluminum chloride, polyaluminum chloride, polyaluminum nitrate, polyaluminum sulfate, aluminum chlorohydrate, polyaluminum silicate sulfate, polyaluminum nitrate sulfate, polyaluminum sulfate chloride, zirconium, iron sulfate, iron chloride, polyiron chloride, polyiron sulfate, polyiron silicate sulfate, polyiron sulfate chloride and combinations thereof.

In another more specific embodiment, the aluminum salt is selected from the group consisting of aluminum sulfate, aluminum chloride, polyaluminum chloride, polyaluminum nitrate, polyaluminum sulfate, aluminum chlorohydrate, polyaluminum silicate sulfate, polyaluminum nitrate sulfate, polyaluminum sulfate chloride and combinations thereof. Typically, the aluminum salt is polybasic aluminum salt, for example, polyaluminum chloride, polyaluminum silicate sulfate and the like.

In another more specific embodiment, the iron salt is selected from the group consisting of iron sulfate, iron chloride, polyiron chloride, polyiron sulfate, polyiron silicate sulfate, polyiron sulfate chloride and combinations thereof. Typically, the iron salt is polybasic iron salt, for example, polyiron chloride, polyiron silicate sulfate and the like.

As understood by a person skilled in the art, the salts used in the present disclosure may include, but are not limited to, salts listed above, and other salts or equivalent commonly used in the art may be applicable for the paint detackifier composition of the present disclosure. And, as understood by a person skilled in the art, the aluminum salts and iron salts are not limited to those salts listed above.

**In** another embodiment, the paint detackifier composition of the present disclosure may further include natural polymer or synthetic polymer in 0.001 to 10 by weight %, such as 0.001 to 2 by weight % of the composition.

The natural polymer or synthetic polymer is selected from the group consisting of acrylamides copolymer or tripolymer, chitosan, guar gum, modified cellulose and combinations thereof. Typically, the acrylamides copolymer or tripolymer may be for example acrylamide-diallylamine copolymer, acrylic acid-quaternary ammonium copolymer.

In a more specific embodiment, the composition of the present disclosure may further comprise a flocculant.

In preparation of the paint detackifier composition of the present disclosure, the dialdehyde-functionalized polyacrylamides the polyacrylamides, aluminum salt and/or iron salt, optional polymer are added into water and mixed thoroughly. The ways and sequences for adding components may be adjusted accordingly, for example adding successively, adding simultaneously, pre-mixing or combinations thereof.

Another embodiment of the present disclosure provides the use of the composition in a liquid medium of an aqueous liquid system.

The term "aqueous liquid system" as used herein may include, but not limited to, a recirculating water system, a wastewater processing system, a paint spray booth, a paint spray booth recirculating water system.

In a specific embodiment, the composition of the present disclosure detackifies paint.

In a more specific embodiment, the composition of the present disclosure detackifies paint which was sprayed during an automobile painting operation.

In a specific embodiment, the organic component and the metal salt contact each other: before they have been introduced into an aqueous liquid system, after they have been introduced into an aqueous liquid system, while they are being introduced into an aqueous liquid system, and any combination thereof.

Another embodiment of the present disclosure provides the use of the paint detackifier compositions for detackifying paint in aqueous liquid and the use for detackifying paint in paint spray booth recirculating water.

The term "paint" as used herein is a generic term for liquids comprised of resin, pigment, dispersing medium and other functional additives, which are used to be painted to the surface of an object to form a solid film having protection, decoration or other special properties. The paints may be divided into water-based paints and solvent-based paints depending on the dispersing medium used. Water-based paints refer to the paints dispersed in water as a dispersing medium. Solvent-based paints refer to the paints dispersed in organic solvents such as aromatic hydrocarbon as a dispersing medium.

The term "aqueous liquid" as used herein means any aqueous solutions including but not limited to liquid media present in waste water treatment systems and liquid media containing paint.

Another embodiment of the present disclosure provides a method for treating paint spray booth recirculating water. The method may comprise adding the paint detackifier composition into paint spray booth recirculating water. This may be for automobile paint as well as for any other sort of paint.

In addition, an organic polymer flocculant may be added to facilitate oversprayed paint mists existing in the water to rapidly flocculate and to be separated from the water.

The added organic polymer flocculant may be one of cationic polyacrylamide solution and anionic polyacrylamide solution, or both cationic polyacrylamide solution and anionic polyacrylamide solution.

The added amounts of the paint detackifier composition and the flocculant are dependent on the amount of the oversprayed paint mists and the type of paints.

As understood by a person skilled in the art, in application, the pre-prepared the paint detackifier composition may be added into water system to be treated, or the components of the paint detackifier composition may be successively or simultaneously added into water system to be treated.

In some applications of the present disclosure, it is necessary to alter the pH of the liquid medium.

In some applications of the present disclosure, the pH of the recirculating water system is suitably maintained between 6.0 and 11.0 and preferably between 7.5 and 10 or 7.5 to 9. During the application, the pH may be periodically adjusted using methods and products commonly used in similar applications, such as sodium hydroxide and sodium carbonate.

The paint detackifier composition of the present disclosure can improve the purifying treatment efficiency of oversprayed paint waste water, decrease turbidity and chemical oxygen demand, extend service life of recirculating water and reduce replacement times of recirculating water.

The paint detackifier composition of the present disclosure can treat oversprayed paint waste water with simple operation and small amount, and has good detackification effect for various water-based or solvent-based paints and thus has wide application.

The paint detackifier composition composition of the present disclosure is different from the conventional paint detackifier composition in composition of raw material and preparation process, and has wide raw material sources, simple preparation process and high cost-performance and thus has competitiveness in market.

After reading and learning the detail description, one can understand the other aspects.

### Examples

The embodiments of the present disclosure are expounded as follows. It should be understood that, the embodiments described herein are merely for illustrating and explaining, rather than limiting, the present disclosure.

In the following examples, unless otherwise specifically stated, all of the used chemical agents are purchased chemical agents.

### I. Preparation of the paint detackifier compositions

1. Components are weighted based on the following amounts, and to a beaker is added a certain amounts of water.
2. Adding the weighted dialdehyde-functionalized polyacrylamides or mixture of dialdehyde and polyacrylamides, and then stirring to make them dispersed thoroughly, and obtaining a component I.
3. Adding the weighted aluminum salt and/or iron salt to component I, and then continuing to stir, mixing the aluminum salt and/or iron salt with the component I thoroughly, discharging and obtaining the paint detackifier composition; or
4. Optionally, continuing to add the weighted natural polymer or synthetic polymer to the paint detackifier composition obtained in step 3, and then continuing to stir, and obtaining the paint detackifier composition containing the natural polymer or synthetic polymer.

### Example 1

The composition of the paint detackifier composition of the Example 1 is shown in table 1.

| Components | amounts(kg) |
|---|---|
| glyoxal-functionalized polyacrylamide (Nalco 64110, available from Nalco company) | 2 |
| aluminum chlorohydrate | 25 |
| deionized water | 73 |

### Example 2

The composition of the paint detackifier composition of the Example 2 is shown in table 2.

| Components | amounts(kg) |
|---|---|
| glyoxal-functionalized polyacrylamide (Nalco 64180, available from Nalco company) | 3 |
| acrylamide-diallylamine copolymer | 0.1 |
| polyaluminum chloride | 30 |
| deionized water | 66.9 |

### Comparative Example 3

The composition of the paint detackifier composition of the Example 3 is shown in table 3.

| Components | amounts(kg) |
|---|---|
| dimethyldiallylammonium chloride-acrylamide copolymer* | 3.9 |
| Glyoxal | 0.1 |
| acrylic acid - quaternary ammonium copolymer | 0.5 |
| aluminum chlorohydrate | 20 |
| deionized water | 75.5 |

| | |
|---|---|
| *Wherein dimethyldiallylammonium chloride-acrylamide copolymer is prepared according to the method disclosed in U.S. Patent No. 7,901,543. | |

### Comparative Example 4

The composition of the paint detackifier composition of the Example 4 is shown in table 4.

| Components | amounts(kg) |
|---|---|
| glyoxal-functionalized polyacrylamide (Nalco 64110, available from Nalco company) | 4.5 |
| acrylic acid - quaternary ammonium copolymer | 0.3 |
| polyaluminum silicate sulfate | 35 |
| deionized water | 60.2 |

### II. Performances tests

Separate tests are run for each paint detackifier composition utilizing water-based basecoats and solvent-based basecoats respectively.
1. Detackifying treatment test for water-based basecoats (manufactured by Nippon Paint Corporation) is conducted using the paint detackifier compositions obtained from examples 1-3 of the present disclosure. Test procedures are as follows:
   - pour 200 ml tap water into a 250 ml glass bottle with cap;
   - add 0.5g water-based basecoat, close the cap and vigorously shake for 30s, making the basecoat dispersed thoroughly;
   - add 0.1-0.3ml of the paint detackifier composition, close the cap and vigorously shake for 30s, mixing the paint detackifier composition with the basecoat thoroughly;
   - adjust the pH to a range of 7 to 9 by pH adjusters (such as aqueous sodium hydroxide solution);
   - add 0.2 to 1ml of 1wt% anionic polyacrylamide (manufactured by Nalco company, Nalco 7768), close the cap and vigorously shake for 20s, making it evenly dispersed.
   -- leave the sample to stand, and then evaluate the samples for the treatment results; observe and record the turbidity. The results are shown in Table 5.

Test results: after being treated by the paint detackifier composition of examples 1-3, the water-based basecoat are completely dispersed and detackified. The floating paint sludge layer is dense and it takes less than 10s for the paint sludge layer to completely come up. Treated water is clear and its turbidity is below 10 NTU, completely meeting the requirement of paint spray booths in the art.

**Table 5**

| | added amounts of the paint detackifier composition (ml) | adjusted pH with the aqueous solution of NaOH | added amounts of 1wt% anionic polyacrylamide (ml) | turbidity of water after treatment (NTU) |
|---|---|---|---|---|
| the paint detackifier composition of examples of the present application | 0.2(example 1) | 8 | 0.35 | 9.86 |
| | 0.2(example 2) | 8 | 0.25 | 9.12 |
| | 0.2(example 3) | 8 | 0.3 | 9.18 |
| | 0.3(example 1) | 8 | 0.4 | 9.7 |
| | 0.3(example 2) | 8 | 0.4 | 8.36 |
| | 0.3(example 3) | 8 | 0.3 | 6.08 |

2. Detackifying treatment test for solvent-based basecoats (manufactured by BASF Corporation) is conducted using the paint detackifier compositions obtained from examples 1-3 of the present disclosure. Test procedures are as follows:
- pour 200 ml tap water in a 250 ml glass bottle with cap;
- add 0.1 to 0.5ml of the paint detackifier composition, close the cap and vigorously shake for 30s, mixing the paint detackifier composition with the basecoat thoroughly;
- adjust the pH to a range of 7 to 9 by pH adjusters (such as the aqueous sodium hydroxide solution);
- add 0.5g solvent-based basecoat, close the cap and vigorously shake for 30s, making the basecoat dispersed thoroughly;
- add 0.2 to 1ml of 1wt% anionic polyacrylamide (manufactured by Nalco company, Nalco 7768), close the cap and vigorously shake for 20s, making it evenly dispersed.
- leave the sample to stand, and then evaluate the samples for the treatment results; observe and record the turbidity. The results are shown in Table 6.

Test results: after being treated by the paint detackifier composition of examples 1-3, the solvent-based basecoats are completely dispersed and detackified. The floating paint sludge layer is dense and it takes less than 10s for the paint sludge layer to completely come up. Treated water is clear and its turbidity is well below 10 NTU, completely meeting the requirement of paint spray booths in the art.

**Table 6**

| | added amounts of the paint detackifier composition (ml) | adjusted pH with the aqueous solution of NaOH | added amounts of 1wt% anionic polyacrylamide (ml) | turbidity of water after treatment (NTU) |
|---|---|---|---|---|
| the paint detackifier composition of examples of the present disclosure | 0.1(example 1) | 8 | 0.4 | 5.69 |
| | 0.1(example 2) | 8 | 0.4 | 7.03 |
| | 0.1(example 3) | 8 | 0.3 | 5.75 |
| | 0.3(example 1) | 8 | 0.3 | 2.6 |
| | 0.3(example 2) | 8 | 0.5 | 6.37 |
| | 0.3(example 3) | 8 | 0.5 | 4.21 |

The present disclosure is an exemplification of the principles of the embodiments of the present disclosure, which is not intended to make any formal or essential limitation to the present invention or limit the present invention to the particular embodiments illustrated. While embodiments of the present disclosure may be embodied in many different forms, described in detail herein are some embodiments of the present invention. Additionally embodiments of the present disclosure include any and all possible combinations of any, some and all elements of various embodiments described herein. The invention is defined in the appended claims.

The above disclosure is intended to be illustrative and not exhaustive. The term "comprising" means "including, but not limited to".

## Claims

1. A composition, the composition comprising:
1) an aldehyde-functionalized polyacrylamide; and
2) a metal salt;
wherein the aldehyde-functionalized polyacrylamide is 0.01 to 70 % by weight of the composition and the metal salt is 0.05 to 90 % by weight of the composition;
wherein the metal salt is selected from the group consisting of aluminum salt, iron salt, zirconium salt, aluminum sulfate, aluminum chloride, polyaluminum chloride, polyaluminum nitrate, polyaluminum sulfate, aluminum chlorohydrate, polyaluminum silicate sulfate, polyaluminum nitrate sulfate, polyaluminum sulfate chloride, zirconium, iron sulfate, iron chloride, polyiron chloride, polyiron sulfate, polyiron silicate sulfate, polyiron sulfate chloride, and a combination thereof.

2. The composition of claim 1, wherein the metal salt is an aluminum salt and/or iron salt, and wherein the aldehyde-functionalized polyacrylamide is 0.01 to 15 % by weight of the composition and the aluminum salt and/or iron salt is 0.05 to 40 % by weight of the composition.

3. The composition of claim 1 or 2, wherein the aldehyde-functionalized polyacrylamide is 0.35 to 50 % by weight of the composition and the metal salt is 0.5 to 80 % by weight of the composition.

4. The composition of any one of claims 1 to 3, wherein the aldehyde-functionalized polyacrylamide is obtained by the reaction of a dialdehyde with a polyacrylamide, and/or
wherein the aldehyde-functionalized polyacrylamide has a molar ratio of dialdehyde groups to acrylamide monomers in a range of 0.001 to 100:1, preferably 0.01 to 10:1, and more preferably 0.01 to 5:1.

5. The composition of any one of claims 1 to 4, wherein the average molecular weight of the aldehyde-functionalized polyacrylamide ranges between 5,000 and 10,000,000 g/mole, preferably between 6,000 and 2,000,000 g/mole.

6. The composition of any one of claims 1 to 5, wherein the aldehyde-functionalized polyacrylamide comprises an aldehyde-functionalized polyacrylamide obtained by the reaction of a dialdehyde with a polyacrylamide, and the dialdehyde comprises glyoxal, malondialdehyde, succindialdehyde, glutaric dialdehyde, or any combination thereof, or
wherein the aldehyde-functionalized polyacrylamide is cationic, anionic, or zwitterionic.

7. The composition of any one of claims 1 to 5, wherein the aldehyde-functionalized polyacrylamide comprises a polyacrylamide formed by the copolymerization of acrylamide monomers, cationic monomers, and/or anionic monomers.

8. The composition of claim 7, wherein the polyacrylamide comprises monomers selected from acrylamide or methacrylamide, or
wherein the cationic monomers comprise diallyl-N,N-disubstituted ammonium chloride, diallydimethylammonium chloride, N-(3-dimethylaminopropyl)-methacrylamide, N-(3-dimethylaminopropyl) acrylamide, methacryloyloxyethyltrimethylammonium chloride, acryloyloxyethyltrimethylammonium chloride, methacryloyloxyethyldimethylbenzylammonium chloride, acryloyloxyethyldimethylbenzylammonium chloride, (3-acrylamidopropyl)trimethyl-ammonium chloride, methacrylamidopropyltrimethylammonium chloride, 3-acrylamido-3-methylbutyltrimethylammonium chloride, 2-vinylpyridine, methacrylic-2-(dimethylamino) ethyl ester, acrylic-2-(dimethylamino) ethyl ester, ethyleneglycol acrylate, or combinations thereof, and the anionic monomers comprise acrylic acid, methacrylic acid, itaconic acid, maleic acid, maleic anhydride and salts of these acids, or combinations thereof.

9. The composition of any one of claims 1 to 8, further comprising natural polymer or synthetic polymer in 0.001 to 10 % by weight of the composition, preferably wherein the natural polymer or synthetic polymer comprises acrylamides copolymer or tripolymer, chitosan, guar gum, cellulose, starch, modified cellulose, or a combination thereof.

10. The composition of any one of claims 1 to 9 wherein the aldehyde-functionalized polyacrylamide and the metal salt contact each other before they have been introduced into an aqueous liquid system, after they have been introduced into an aqueous liquid system, while they are being introduced into an aqueous liquid system, or a combination thereof.

11. The composition of any one of claims 1 to 9, further comprising a flocculant.

12. A method comprising the step of introducing the composition of claim 1 into a liquid medium of an aqueous liquid system.

13. The method of claim 12 wherein the aqueous liquid system comprises a recirculating water system, a wastewater processing system, a paint spray booth, a paint spray booth recirculating water system, or a combination thereof.

14. The method of claim 12 wherein the composition detackifies paint, preferably wherein
the composition detackifies paint which was sprayed during an automobile painting operation.

15. The method of any one of claims 12 to 14 further comprising the step of altering the pH of the liquid medium.

## Patentansprüche

1. Zusammensetzung, die Zusammensetzung umfassend:
1) ein aldehydfunktionalisiertes Polyacrylamid; und
2) ein Metallsalz;
wobei das aldehydfunktionalisierte Polyacrylamid 0,01 bis 70 Gew.-% der Zusammensetzung ausmacht und das Metallsalz 0,05 bis 90 Gew.-% der Zusammensetzung ausmacht;
wobei das Metallsalz aus der Gruppe ausgewählt ist, bestehend aus Aluminiumsalz, Eisensalz, Zirkoniumsalz, Aluminiumsulfat, Aluminiumchlorid, Polyaluminiumchlorid, Polyaluminiumnitrat, Polyaluminiumsulfat, Aluminiumchlorhydrat, Polyaluminiumsilikatsulfat, Polyaluminiumnitratsulfat, Polyaluminiumsulfatchlorid, Zirkonium, Eisensulfat, Eisenchlorid, Polyeisenchlorid, Polyeisensulfat, Polyeisensilikatsulfat, Polyeisensulfatchlorid und einer Kombination davon.

2. Zusammensetzung nach Anspruch 1, wobei das Metallsalz ein Aluminiumsalz und/oder Eisensalz ist, und wobei das aldehydfunktionalisierte Polyacrylamid 0,01 bis 15 Gew.-% der Zusammensetzung beträgt und das Aluminiumsalz und/oder Eisensalz 0,05 bis 40 Gew.-% der Zusammensetzung beträgt.

3. Zusammensetzung nach Anspruch 1 oder 2, wobei das aldehydfunktionalisierte Polyacrylamid 0,35 bis 50 Gew.-% der Zusammensetzung beträgt und das Metallsalz 0,5 bis 80 Gew.-% der Zusammensetzung beträgt.

4. Zusammensetzung nach einem der Ansprüche 1 bis 3, wobei das aldehydfunktionalisierte Polyacrylamid durch die Reaktion eines Dialdehyds mit einem Polyacrylamid erhalten wird, und/oder
wobei das aldehydfunktionalisierte Polyacrylamid ein Molverhältnis von Dialdehydgruppen zu Acrylamidmonomeren in einem Bereich von 0,001 bis 100 : 1, vorzugsweise 0,01 bis 10 : 1 und mehr bevorzugt 0,01 bis 5 : 1 aufweist.

5. Zusammensetzung nach einem der Ansprüche 1 bis 4, wobei das mittlere Molekulargewicht des aldehydfunktionalisierten Polyacrylamids zwischen 5.000 und 10.000.000 g/Mol liegt, vorzugsweise zwischen 6.000 und 2.000.000 g/Mol.

6. Zusammensetzung nach einem der Ansprüche 1 bis 5, wobei das aldehydfunktionalisierte Polyacrylamid ein aldehydfunktionalisiertes Polyacrylamid umfasst, erhalten durch die Reaktion eines Dialdehyds mit einem Polyacrylamid, und der Dialdehyd Glyoxal, Malondialdehyd, Succindialdehyd, glutarischen Dialdehyd oder eine beliebige Kombination davon umfasst, oder wobei das aldehydfunktionalisierte Polyacrylamid kationisch, anionisch oder zwitterionisch ist.

7. Zusammensetzung nach einem der Ansprüche 1 bis 5, wobei das aldehydfunktionalisierte Polyacrylamid ein Polyacrylamid umfasst, das durch die Copolymerisation von Acrylamidmonomeren, kationischen Monomeren und/oder anionischen Monomeren ausgebildet ist.

8. Zusammensetzung nach Anspruch 7, wobei das Polyacrylamid Monomere umfasst, ausgewählt aus Acrylamid oder Methacrylamid, oder
wobei die kationischen Monomere Diallyl-N,N-disubstituiertes Ammoniumchlorid, Diallyldimethylammoniumchlorid, N-(3-Dimethylaminopropyl)methacrylamid, N-(3-Dimethylaminopropyl)acrylamid, Methacryloyl-oxyethyltrimethylammoniumchlorid, Acryloyloxyethyltrimethylammoniumchlorid, Methacryloyloxyethyldimethylbenzylammoniumchlorid, Acryloyloxyethyldimethylbenzylammoniumchlorid, (3-Acrylamidopropyl)trimethylammoniumchlorid, Methacrylamidopropyltrimethylammoniumchlorid, 3-Acrylamido-3-methylbutyltrimethylammoniumchlorid, 2-Vinylpyridin, Methacrylsäure-2-(dimethylamino)ethylester, Acrylsäure-2-(dimethylamino)ethylester, Ethylenglykolacrylat oder Kombinationen davon umfassen; und die anionischen Monomere Acrylsäure, Methacrylsäure, Itaconsäure, Maleinsäure, Maleinsäureanhydrid und Salze dieser Säuren oder Kombinationen davon umfassen.

9. Zusammensetzung nach einem der Ansprüche 1 bis 8, ferner umfassend natürliches Polymer oder synthetisches Polymer in 0,001 bis 10 Gew.-% der Zusammensetzung, vorzugsweise wobei das natürliche Polymer oder synthetische Polymer Acrylamid-Copolymer oder -Tripolymer, Chitosan, Guarkernmehl, Cellulose, Stärke, modifizierte Cellulose oder eine Kombination davon umfasst.

10. Zusammensetzung nach einem der Ansprüche 1 bis 9, wobei das aldehydfunktionalisierte Polyacrylamid und das Metallsalz miteinander in Kontakt treten, bevor sie in ein wässriges flüssiges System eingebracht worden sind, nachdem sie in ein wässriges flüssiges System eingebracht worden sind, während sie in ein wässriges flüssiges System eingebracht werden, oder eine Kombination davon.

11. Zusammensetzung nach einem der Ansprüche 1 bis 9, ferner umfassend ein Flockungsmittel.

12. Verfahren, umfassend den Schritt des Einbringens der Zusammensetzung nach Anspruch 1 in ein flüssiges Medium eines wässrigen flüssigen Systems.

13. Verfahren nach Anspruch 12, wobei das wässrige flüssige System ein Wasserkreislaufsystem, ein Abwasserbehandlungssystem, eine Farbspritzkabine, ein Farbspritzkabinen-Wasserkreislaufsystem oder eine Kombination davon umfasst.

14. Verfahren nach Anspruch 12, wobei die Zusammensetzung Farbe entklebt, vorzugsweise wobei
die Zusammensetzung Farbe entklebt, der während eines Automobillackiervorgangs versprüht wurde.

15. Verfahren nach einem der Ansprüche 12 bis 14, ferner umfassend den Schritt eines Änderns des pH-Werts des flüssigen Mediums.

## Revendications

1. Composition, la composition comprenant :
1) un polyacrylamide à fonction aldéhyde ; et
2) un sel métallique ;
dans laquelle le polyacrylamide à fonction aldéhyde représente 0,01 à 70 % en poids de la composition et le sel métallique représente 0,05 à 90 % en poids de la composition ;
dans laquelle le sel métallique est choisi dans le groupe constitué par sel d'aluminium, sel de fer, sel de zirconium, sulfate d'aluminium, chlorure d'aluminium, chlorure de polyaluminium, nitrate de polyaluminium, sulfate de polyaluminium, chlorhydrate d'aluminium, sulfate de silicate de polyaluminium, sulfate de nitrate de polyaluminium, chlorure de sulfate de polyaluminium, zirconium, sulfate de fer, chlorure de fer, chlorure de polyfer, sulfate de polyfer, sulfate de silicate de polyfer, chlorure de sulfate de polyfer, et une combinaison de ceux-ci.

2. Composition selon la revendication 1, dans laquelle le sel métallique est un sel d'aluminium et/ou un sel de fer, et dans laquelle le polyacrylamide à fonction aldéhyde représente 0,01 à 15 % en poids de la composition et le sel d'aluminium et/ou sel de fer représentent 0,05 à 40 % en poids de la composition.

3. Composition selon la revendication 1 ou 2, dans laquelle le polyacrylamide à fonction aldéhyde représente 0,35 à 50 % en poids de la composition et le sel métallique représente 0,5 à 80 % en poids de la composition.

4. Composition selon l'une quelconque des revendications 1 à 3, dans laquelle le polyacrylamide à fonction aldéhyde est obtenu par la réaction d'un dialdéhyde avec un polyacrylamide, et/ou
dans lequel le polyacrylamide à fonction aldéhyde a un rapport molaire entre les groupes dialdéhyde et les monomères acrylamide dans une plage de 0,001 à 100:1, de préférence 0,01 à 10:1, et plus préférablement 0,01 à 5:1.

5. Composition selon l'une quelconque des revendications 1 à 4, dans laquelle la masse moléculaire moyenne du polyacrylamide à fonction aldéhyde est dans la plage entre 5 000 et 10 000 000 g/mole, de préférence entre 6 000 et 2 000 000 g/mole.

6. Composition selon l'une quelconque des revendications 1 à 5, dans laquelle le polyacrylamide à fonction aldéhyde comprend un polyacrylamide à fonction aldéhyde obtenu par la réaction d'un dialdéhyde avec un polyacrylamide, et le dialdéhyde comprend glyoxal, malondialdéhyde, succindialdéhyde, dialdéhyde glutarique, ou une combinaison quelconque de ceux-ci, ou dans laquelle le polyacrylamide à fonction aldéhyde est cationique, anionique ou zwittérionique.

7. Composition selon l'une quelconque des revendications 1 à 5, dans laquelle le polyacrylamide à fonction aldéhyde comprend un polyacrylamide formé par la copolymérisation de monomères acrylamide, de monomères cationiques, et/ou de monomères anioniques.

8. Composition selon la revendication 7, dans laquelle le polyacrylamide comprend des monomères choisis parmi acrylamide ou méthacrylate, ou
dans laquelle les monomères cationiques comprennent chlorure de diallyl-N,N-ammonium disubstitué, chlorure de diallydiméthylammonium, N-(3-diméthylaminopropyl)-méthacrylate, N-(3-diméthylaminopropyl)acrylamide, chlorure de méthacryloyl-oxyéthyltriméthylammonium, chlorure d'acryloyloxyéthyltriméthylammonium, chlorure de méthacryloyloxyéthyldiméthylbenzylammonium, chlorure d'acryloyl-oxyéthyldiméthylbenzylammonium, chlorure de (3-acrylamidopropyl)triméthylammonium, chlorure de méthacrylamidopropyltriméthylammonium, chlorure de 3-acrylamido-3-méthylbutyltriméthylammonium, 2-vinylpyridine, ester méthacrylique de 2-(diméthylamino)éthyle, ester acrylique de 2-(diméthylamino)éthyle, acrylate d'éthylèneglycol, ou des combinaisons de ceux-ci ; et les monomères anioniques comprennent acide acrylique, acide méthacrylique, acide itaconique, acide maléique, anhydride maléique et des sels de ces acides, ou des combinaisons de ceux-ci.

9. Composition selon l'une quelconque des revendications 1 à 8, comprenant en outre un polymère naturel ou un polymère synthétique dans 0,001 à 10 % en poids de la composition, de préférence dans laquelle le polymère naturel ou le polymère synthétique comprend un copolymère ou un tripolymère d'acrylamides, du chitosane, de la gomme de guar, de la cellulose, de l'amidon, de la cellulose modifiée, ou une combinaison de ceux-ci.

10. Composition selon l'une quelconque des revendications 1 à 9 dans laquelle le polyacrylamide à fonction aldéhyde et le sel métallique entrent en contact l'un avec l'autre avant d'avoir été introduits dans un système liquide aqueux, après avoir été introduits dans un système liquide aqueux, pendant qu'ils sont introduits dans un système liquide aqueux, ou une combinaison de ceux-ci.

11. Composition selon l'une quelconque des revendications 1 à 9, comprenant en outre un floculant.

12. Procédé comprenant l'étape d'introduction de la composition selon la revendication 1 dans un milieu liquide d'un système liquide aqueux.

13. Procédé selon la revendication 12 dans lequel le système aqueux liquide comprend un système d'eau à recirculation, un système de traitement des eaux usées, une cabine de pulvérisation de peinture, un système d'eau à recirculation de cabine de pulvérisation de peinture, ou une combinaison de ceux-ci.

14. Procédé selon la revendication 12 dans lequel la composition décolle la peinture, de préférence dans lequel
la composition décolle la peinture qui a été pulvérisée au cours d'une opération de peinture automobile.

15. Procédé selon l'une quelconque des revendications 12 à 14 comprenant en outre l'étape de modification du pH du milieu liquide.
